(19) Europäisches Patentamt
European Patent Office
Office européen des brevets

(11) EP 3 462 180 A1

(12) EUROPÄISCHE PATENTANMELDUNG

(43) Veröffentlichungstag:
03.04.2019 Patentblatt 2019/14

(51) Int Cl.:
G01P 13/04 (2006.01)     G01P 3/26 (2006.01)
G01P 3/48 (2006.01)

(21) Anmeldenummer: 17194276.6

(22) Anmeldetag: 02.10.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Siemens Aktiengesellschaft
80333 München (DE)

(72) Erfinder:
• Klos, Hans-Henning
91249 Weigendorf (DE)
• Meierhöfer, Franz
91241 Kirchensittenbach (DE)
• Scheibner, Dirk
90473 Nürnberg (DE)
• Schimmer, Jürgen
90473 Nürnberg (DE)
• Tacke, Dominik
90409 Nürnberg (DE)

(54) VERFAHREN UND VORRICHTUNG ZUR ROTATIONSÜBERWACHUNG

(57) Verfahren zur Überwachung der Rotation eines rotierenden Bauteils (1) angegeben, welches die folgenden Schritte umfasst:

a) Messung akustischer Signale, welche durch Luftbewegungen aufgrund der Rotation des Bauteils (1) verursacht sind, mittels wenigstens zweier Schallaufnehmer (11a,11b),
- wobei die beiden Schallaufnehmer (11a,11b) außerhalb des rotierenden Bauteils (1) ortsfest positioniert sind
- und wobei die beiden Schallaufnehmer (11a,11b) bezüglich der Laufrichtung des rotierenden Bauteils (1) versetzt zueinander positioniert sind,
und

b) Bestimmung der Drehrichtung (r) des rotierenden Bauteils (1) mittels der Analyse des zeitlichen Versatzes (Δt) von periodischen Anteilen der Signale (x[m],y[m]) der beiden Schallaufnehmer (11a,11b).

Weiterhin wird eine entsprechende Vorrichtung zur Rotations-überwachung angegeben.

FIG 1

EP 3 462 180 A1

**Beschreibung**

Die vorliegende Erfindung betrifft ein Verfahren zur Überwachung der Rotation eines rotierenden Bauteils, wobei akustische Signale gemessen werden, welche durch Luftbewegungen aufgrund der Rotation des Bauteils verursacht sind. Weiterhin betrifft die Erfindung eine Vorrichtung zur Durchführung dieses Verfahrens.

Bekannte Verfahren und Vorrichtungen zur Rotationsüberwachung an rotierenden Bauteilen dienen meist in erster Linie zur Messung von Drehzahlen. Solche Drehzahlsensoren basieren meist auf einem Messprinzip, bei dem eine vorgegebene Struktur an einer Umfangsposition des rotierenden Bauteils entweder optisch oder induktiv abgetastet wird. Mit anderen Worten wird durch einen optischen oder einen induktiven Sensor ermittelt, wie häufig sich die gegebene Struktur innerhalb einer vorgegebenen Zeiteinheit an dem Sensor vorbei bewegt. Hierdurch kann auf relativ einfache Weise eine Drehzahl ermittelt werden, wenn entweder nur eine solch vorgegebene Struktur oder eine bekannte Anzahl solcher Strukturen über den Umfang des Bauteils verteilt angeordnet ist. Ein Nachteil solcher Drehzahlsensoren ist, dass zumindest bei den einfach aufgebauten Varianten eine Ermittlung der Drehrichtung mit nur einem solchen Sensor nicht ohne weiteres möglich ist. Um zusätzlich zur Drehzahl auch die Drehrichtung zu ermitteln, ist es daher nötig, zwei solche optischen oder induktiven Sensoren versetzt zueinander anzuordnen. Es können auch mehrere derartige Sensoren zusammen in einem übergeordneten Sensorkopf (beispielsweise in einem Drehgeber) integriert sein. Der apparative Aufwand für eine solche Sensoranordnung beziehungsweise der Aufwand für die Auswertung der einzelnen Sensorsignale ist jedoch durch die zugrundeliegenden optischen beziehungsweise induktiven Messmethoden vergleichsweise hoch.

Aufgabe der Erfindung ist es daher, ein Verfahren zur Überwachung der Rotation eines rotierenden Bauteils anzugeben, welches die genannten Nachteile vermeidet. Insbesondere soll ein Verfahren zur Rotationsüberwachung angegeben werden, durch welches die Drehrichtung des Bauteils ermittelt wird und bei welchem der apparative Aufwand für die zugrunde liegende Messung vergleichsweise niedrig ist. Eine weitere Aufgabe ist es, eine Vorrichtung zur Durchführung eines solchen Verfahrens anzugeben.

Diese Aufgaben werden durch das in Anspruch 1 beschriebene Verfahren und die in Anspruch 15 beschriebene Vorrichtung gelöst.

Das erfindungsgemäße Verfahren dient zur Überwachung der Rotation eines rotierenden Bauteils und umfasst die folgenden Schritte:

a) Messung akustischer Signale, welche durch Luftbewegungen aufgrund der Rotation des Bauteils verursacht sind, mittels wenigstens zweier Schallaufnehmer,

- wobei die beiden Schallaufnehmer außerhalb des rotierenden Bauteils ortsfest positioniert sind
- und wobei die beiden Schallaufnehmer bezüglich der Laufrichtung des rotierenden Bauteils versetzt zueinander positioniert sind,

und
b) Bestimmung der Drehrichtung des rotierenden Bauteils mittels der Analyse des zeitlichen Versatzes von periodischen Anteilen der Signale der beiden Schallaufnehmer.

Unter der genannten Positionierung der beiden Schallaufnehmer, bei denen diese "bezüglich der Laufrichtung des rotierenden Bauteils versetzt" angeordnet sind ist zu verstehen, dass ein gegebener Punkt an der Oberfläche des Bauteils bei dessen Rotation an den einzelnen Schallaufnehmern nacheinander (also bei unterschiedlichen Drehwinkeln) vorbeistreicht. Die beiden Schallaufnehmer sind also bezüglich der Drehachse des Bauteils in azimutaler Richtung versetzt. Anders ausgedrückt weist dieser gegebene Punkt jeweils für unterschiedliche Winkelpositionen einen kürzesten Abstand zum ersten Schallaufnehmer und einen kürzesten Abstand zum zweiten Schallaufnehmer auf. Die Differenz dieser beiden Winkelpositionen entspricht dabei einem Winkelversatz der beiden Schallaufnehmer bezüglich der Rotationsachse des rotierenden Bauteils. Dieser effektive Winkelversatz ist dabei sowohl von dem Abstand der beiden Schallaufnehmer untereinander als auch von ihren Abständen und ihrer Positionierung relativ zur Rotationsachse abhängig.

Durch die beiden Schallaufnehmer können akustische Signale gemessen werden, die durch die Luftbewegungen aufgrund der Rotation des Bauteils verursacht sind. Solche Luftbewegungen entstehen insbesondere durch hervorstehende Strukturen und/oder Vertiefungen an der Peripherie des rotierenden Bauteils. Es genügt prinzipiell eine einzelne solche hervorstehende Struktur und/oder Vertiefung an der Peripherie des Bauteils, um einen sogenannten "Druckschlag" in der umgebenden Luft und somit ein messbares akustisches Signal zu bewirken. Ein solcher Druckschlag führt zu einem durch die Rotation periodisch wiederkehrenden Extrempunkt (meist einem Maximum) in der von dem jeweiligen Schallaufnehmer gemessenen Signalfolge. Da bei dem erfindungsgemäßen Verfahren wenigstens zwei solche Signalfolgen mit zwei versetzten Schallaufnehmern gemessen werden, kann aus dem zeitlichen Versatz der Extrempunkte in den beiden Einzel-Signalfolgen auf die Drehrichtung des rotierenden Bauteils geschlossen werden. Dabei hängt der Absolutwert dieses zeitlichen Versatzes neben der Drehrichtung auch von der Drehgeschwindigkeit (also der Drehzahl) ab. Durch die Relation des zeitlichen Versatzes zwischen den extremen Punkten der beiden Einzel-Signalfolgen zum periodischen Abstand der Extrempunkte innerhalb der jeweiligen Einzel-Signalfolgen kann dann zuverlässig auf die Drehrichtung geschlossen werden. So ist insbesondere bei paarweise relativ dicht aufeinander folgenden Extrempunkten in den beiden Einzel-Signalfolgen (im Verhältnis zum Perioden-Abstand in einer einzelnen Signalfolge) die Reihenfolge der beiden Extrempunkte charakteristisch für den einen oder anderen Drehsinn des Bauteils.

Die akustische Messung der Druckschläge in der Luft erlaubt eine apparativ sehr einfache Überwachung des Rotationszustandes eines rotierenden Bauteils, da akustische Signale (auch im Vergleich zu optischen und oder induktiven Signalen) vergleichsweise empfindlich gemessen sowie leicht aufgearbeitet und ausgewertet werden können. Die Verwendung zweier versetzt angeordnete Schallaufnehmer erlaubt auf einfache Weise eine Ermittlung der Drehrichtung, wobei optional auch weitere Parameter der Rotation wie beispielsweise die Drehzahl ermittelt werden können.

Die erfindungsgemäße Vorrichtung ist zur Überwachung der Rotation eines rotierenden Bauteils ausgestaltet. Sie umfasst

- wenigstens zwei Schallaufnehmer zur Messung akustischer Signale, welche durch Luftbewegungen aufgrund der Rotation des Bauteils verursacht sind, und
- eine Auswerteeinheit zur Bestimmung der Drehrichtung des rotierenden Bauteils mittels einer Analyse des zeitlichen Versatzes von periodischen Anteilen der Signale der beiden Schallaufnehmer,
- wobei die beiden Schallaufnehmer außerhalb des rotierenden Bauteils ortsfest positioniert sind
- und wobei die beiden Schallaufnehmer bezüglich der Laufrichtung des rotierenden Bauteils versetzt zueinander positioniert sind.

Dabei ist das rotierende Bauteil selbst nicht Teil der erfindungsgemäßen Überwachungsvorrichtung. Die Überwachungsvorrichtung kann aber einen Bereich aufweisen, in dem das rotierende Bauteil mit einer vorgegebenen Position und Ausrichtung der Rotationsachse positionierbar ist. In diesem Fall sind die beiden Schallaufnehmer bereits "bezüglich der Laufrichtung des rotierenden Bauteils versetzt zueinander positioniert", wenn bei diesem Bereich für das Bauteil die Lage der Drehachse bereits vorgegeben ist. Falls die Überwachungsvorrichtung einen solchen festdefinierten Bereich nicht bereits aufweist, dann sind die beiden Schallaufnehmer zumindest "bezüglich des Umfangs des rotierenden Bauteils versetzt zueinander positionierbar". Die Vorteile der erfindungsgemäßen Vorrichtung entsprechend den oben beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens und der Vorrichtung vorteilhaft miteinander kombiniert werden.

Bei den beiden Schallaufnehmern kann es sich allgemein vorteilhaft um Mikrofone handeln. Alternativ kann es sich jedoch bei einem oder bei beiden Schallaufnehmern jedoch prinzipiell auch um andere Schallaufnehmer, beispielsweise um Hydrophone oder Körperschallaufnehmer handeln. Hydrophone können zur Schallaufnahme in Flüssigkeiten dienen, während Körperschallaufnehmer beispielsweise vorteilhaft als Beschleunigungssensoren dienen können.

So kann bei einer bevorzugten Ausführungsform des Verfahrens das rotierende Bauteil wenigstens eine hervorstehende Struktur und/oder wenigstens eine Einbuchtung an einer jeweils zugehörigen Umfangsposition des Bauteils aufweisen. Dabei ist diese wenigstens eine hervorstehende Struktur und/oder Einbuchtung insbesondere so ausgestaltet, dass sie bei der Rotation des Bauteils einen Druckschlag in der Umgebungsluft verursachen kann. Bei einer entsprechenden bevorzugten Ausführungsform der Vorrichtung zur Rotationsüberwachung sind die beiden Schallaufnehmer so ausgestaltet, dass sie einen Druckschlag in der Umgebungsluft detektieren können, welcher durch eine solche hervorstehende Struktur und/oder Einbuchtung am rotierenden Bauteils verursacht ist.

Besonders bevorzugt weist das rotierende Bauteil eine Mehrzahl derartiger hervorstehender Strukturen und/oder Einbuchtungen auf, welche über den Umfang des Bauteils verteilt angeordnet sind. Prinzipiell ist zwar eine solche Struktur für die Durchführung der Rotations-Überwachung ausreichend, es ist jedoch für die Symmetrie des rotierenden Bauteils vorteilhaft, wenn mehrere derartige Strukturen vorgesehen sind. So hilft eine solche Rotationssymmetrie beispielsweise, Unwuchten des rotierenden Bauteils zu vermeiden oder zumindest zu reduzieren. Weiterhin kann es für die Genauigkeit der Rotationsüberwachung vorteilhaft sein, wenn es durch die Verwendung mehrerer solcher Strukturen bei einer Umdrehung des Bauteils zu mehreren Druckschlägen kommt, was zu einer größeren Frequenz in der Abfolge der Extrempunkte (also meist der Maxima) in den akustischen Signalfolgen führt.

Wenn das rotierende Bauteil eine Mehrzahl solcher hervorstehender Strukturen und/oder Einbuchtungen aufweist, dann ist es besonders vorteilhaft, wenn diese Strukturen regelmäßig über den Umfang des Bauteils verteilt sind. Besonders bevorzugt sind diese Strukturen gleich verteilt über die Peripherie des Bauteils angeordnet. Eine solche gleichmäßige Verteilung trägt zu einer besonders symmetrischen Ausgestaltung des Bauteils bei.

Bei einer allgemein bevorzugten Ausführungsform des Verfahrens weist dieses zusätzlich den folgenden Schritt auf:

c) Bestimmung der Drehzahl des rotierenden Bauteils, insbesondere mittels der Analyse des zeitlichen Versatzes von periodischen Anteilen innerhalb des Signals eines einzelnen Schallaufnehmers.

Mit anderen Worten weisen die beiden Einzel-Signalfolgen der beiden einzelnen Schallaufnehmer jeweils periodisch wiederkehrende Signalmuster auf, welche auf die Druckschläge der wenigstens einen hervorstehenden und/oder eingebuchteten Struktur an der Peripherie des rotierenden Bauteils zurückzuführen sind. Durch Analyse des zeitlichen Versatzes (also mit anderen Worten der Frequenz) dieser periodischen Signalstrukturen ist bei Kenntnis der Anzahl der einander gleichenden hervorstehenden oder eingebuchteten Strukturen eine Ermittlung der Drehzahl möglich.

Die Auswertung der akustischen Signale kann vorteilhaft so erfolgen, dass die Bestimmung der Drehrichtung und/oder die Bestimmung der Drehzahl auf einer Auswertung der Signalflanken in den beiden Einzel-Signalfolgen basieren. Mit anderen Worten basiert die Auswertung hierbei auf einer Bestimmung der Zeitpunkte, für welche entweder die Höhe der jeweiligen einzelnen Schallaufnehmersignale und/oder der Anstieg in der Höhe der jeweiligen einzelnen Schallaufnehmersignale einen jeweils vorgegebenen Schwellwert überschreiten. Es wird also die Lage eines Peaks in der Signalfolge ermittelt, indem entweder das Überschreiten einer Schwelle für das Signal selbst oder für den Anstieg des Signals überwacht wird. Wenn auf diese Weise die Lage von mehreren periodisch aufeinanderfolgenden Peaks in den Signalfolgen beider Schallaufnehmer ermittelt wird, dann kann zum einen aus dem zeitlichen Versatz zwischen den Peaks der einzelnen Schallaufnehmer auf die Drehrichtung geschlossen werden. Zum anderen kann aus dem zeitlichen Abstand der einzelnen Peaks innerhalb einer gegebenen Signalfolge (bei Kenntnis der Anzahl der Strukturen auf dem Umfang des Bauteils) auf die Drehzahl geschlossen werden. Diese beschriebene Überwachung der Signalflanken ist vor allem dann besonders geeignet, wenn das Signal-zu-Rausch-Verhältnis der beiden Schallaufnehmersignale relativ gut ist und entsprechend die periodischen Peaks in den Einzel-Signalfolgen vergleichsweise gut über dem zugrunde liegenden Rauschen detektierbar sind.

Alternativ oder zusätzlich zu der beschriebenen Analyse der Signalflanken ist es aber auch möglich, dass zur Bestimmung der Drehrichtung und/oder zur Bestimmung der Drehzahl aus den beiden Einzel-Signalfolgen ein Korrelationsverfahren angewendet wird. Insbesondere kann der folgende zusätzliche Schritt vorgenommen werden:

d) Bestimmung einer Kreuzkorrelationsfunktion aus den Einzel-Signalfolgen der beiden einzelnen Schallaufnehmer mittels einer Auswerteeinheit.

Dieser zusätzliche Schritt d) erfolgt bevorzugt zeitlich zwischen den bereits genannten Schritten a) und b), also zwischen der Messung der akustischen Signale und der Bestimmung der Drehrichtung.

Beispielsweise können die beiden Einzel-Signalfolgen der beiden Schallaufnehmer jeweils als diskrete Signalfolgen x[m] und y[m] vorliegen, wobei x[m] die Einzel-Signalfolge für den ersten Schallaufnehmer mit dem Index m ist und y[m] die entsprechende Einzel-Signalfolge für das zweite Schallaufnehmer ist. Die Kreuzkorrelationsfunktion $R_{xy}[n]$ dieser beiden diskreten Signalfolgen ist dann beispielsweise für den Verschiebungsindex n durch die folgende Gleichung gegeben, sofern es sich bei dem jeweiligen akustischen Signal um ein Energiesignal handelt:

$$R_{xy}[n] = (x \star y)[n] = \sum_{m=-\infty}^{\infty} x^*[m]\, y[m+n]$$

wobei x* das konjugiert Komplexe der Signalfolge x ist. Falls es sich alternativ um Leistungssignale handelt, ist die Kreuzkorrelationsfunktion $R_{xy}[n]$ der beiden diskreten Signalfolgen dann für den Verschiebungsindex n alternativ durch die folgende Gleichung gegeben:

$$R_{xy}[n] = (x \star y)[n] = \lim_{M \to \infty} \frac{1}{2M+1} \sum_{m=-M}^{M} x^*[m]\, y[m+n]$$

Wesentlich ist nur, dass die beiden Schallaufnehmer untereinander den gleichen Signaltyp liefern.

Eine solche Kreuzkorrelationsfunktion von zwei gegebenen Einzel-Signalfolgen, welche jeweils periodische Signalfolgen sind, ist selbst ebenfalls eine periodische Signalfolge. Aus der absoluten Position (also dem Verschiebungsindex n) für das erste Maximum in der Kreuzkorrelationsfunktion ist dabei der Versatz der entsprechenden Signalmaxima in den Einzel-Signalfolgen bestimmbar. Somit ist aus der absoluten Position dieses ersten Maximums auch die Drehrichtung des rotierenden Bauteils bestimmbar.

Aus dem Abstand der einzelnen aufeinanderfolgenden Maxima in der Kreuzkorrelationsfolge ist andererseits aber auch die Drehzahl des Bauteils bestimmbar. Alternativ zu der Bestimmung der Drehzahl aus der Kreuzkorrelationsfunktion der beiden Einzel-Signalfolgen ist die Drehzahl aber auch vorteilhaft aus der Autokorrelationsfunktion für nur eine der beiden Signalfolgen oder besonders vorteilhaft auch für jede der beiden Signalfolgen bestimmbar.

Unabhängig davon, welche Korrelationsmethode gewählt wird (also ob Kreuzkorrelationsfunktion oder Autokorrelationsfunktion) und unabhängig davon, ob die Drehrichtung oder die Drehzahl oder beides mittels der Korrelationsmethode bestimmt wird ist ein allgemeiner Vorteil des Korrelationsverfahrens, dass die aus den Messsignalen abzuleitenden Größen auch bei einem relativ schlechten Signal-zu-Rausch-Verhältnis der Rohsignale mit einer hohen Zuverlässigkeit bestimmbar sind.

Vorteilhaft kann die Korrelationsmethode auch für eine weitere Ausführungsform des Verfahrens zum Einsatz kommen: So kann das Verfahren zusätzlich die folgenden Schritte umfassen:

e) Speicherung von wenigstens einer Teilfolge aus der Einzel-Signalfolge von wenigstens einem der beiden Schallaufnehmer,
f) Messung einer weiteren Teilfolge mit demselben Schallaufnehmer zu einem späteren Zeitpunkt,
g) Bestimmung einer Kreuzkorrelationsfunktion aus den in Schritt e) gespeicherten Teilfolge und der in Schritt f) gemessenen Teilfolge.

Mit anderen Worten kann eine (unter Umständen wiederholte) Speicherung eines Teils des periodischen Profils des akustischen Messsignals erfolgen und es können spätere Messdaten mit diesem abgespeicherten Profil verglichen werden. Beispielsweise kann die erwähnte Teilfolge dem gemessenen Signal für eine Umdrehung des Bauteils oder für eine vorgegebene Anzahl solcher Umdrehungen entsprechen. Mit dieser Ausführungsform des Verfahrens kann beispielsweise die Qualität der Messung der Drehrichtung und/oder der Drehzahl beurteilt werden. Es wird neben den reinen Messwerten ein Maß für die Zuverlässigkeit der Messwerte geliefert. Wenn nämlich eine vergleichsweise geringe Korrelation einer aktuellen Teilfolge mit einer früher abgespeicherten Teilfolge besteht, dann deutet dies auf eine Verschlechterung der Signalqualität (beispielsweise durch Fremdgeräusche hin) und somit auf eine geringere Zuverlässigkeit der Drehrichtungs-Erkennung und/oder Drehzahl-Messung.

Alternativ oder zusätzlich kann diese Variante genutzt werden, um eine Überwachung des rotierenden Bauteils in Bezug auf eine Verschmutzung (des Bauteils selbst oder der Umgebung) oder in Bezug auf einen Verschleiß zu ermöglichen. Insbesondere kann durch den Vergleich der Messdaten mit entsprechenden früher abgespeicherten Messdaten die Detektion einer sich entwickelnden Unwucht des rotierenden Bauteils ermöglicht werden.

Bei einer weiteren vorteilhaften Variante des Verfahrens können die beiden Schallaufnehmer in unterschiedlichen radialen Abständen zum rotierenden Bauteil angeordnet sein. Mit anderen Worten kann ein erster Schallaufnehmer vergleichsweise nah bei der Peripherie des Bauteils angeordnet sein, während ein zweiter Schallaufnehmer radial weiter entfernt positioniert ist. Ein Vorteil dieser Ausführungsvariante kann beispielsweise darin liegen, dass zusätzlich zur allgemein beschriebenen Bestimmung der Drehrichtung die Messdaten des ersten Schallaufnehmers bevorzugt zur Bestimmung der Drehzahl des Bauteils genutzt werden, während der weiter entfernt liegende zweite Schallaufnehmer bevorzugt zur zusätzlichen Überwachung der Umgebungsgeräusche genutzt wird. Letzteres kann beispielsweise vorteilhaft sein, um weitere akustisch messbare Parameter beim Betrieb einer übergeordneten apparativen Einrichtung zu überwachen. Die beiden Schallaufnehmer können auch unabhängig von ihrem Abstand allgemein unterschiedlich ausgestaltet sein.

Grundsätzlich können die beiden Schallaufnehmer vergleichsweise offen, also ohne eine spezielle Kapselung, neben dem rotierenden Bauteil positioniert werden. Alternativ ist es jedoch auch möglich und unter Umständen bevorzugt, wenn die beiden Schallaufnehmer innerhalb eines gemeinsamen Gehäuses angeordnet sind, welches außerhalb des rotierenden Bauteils ortsfest positioniert ist. Beispielsweise können die beiden Schallaufnehmer durch dieses gemeinsame Gehäuse (beispielsweise eine sogenannte Sensorbox) zu einem übergeordneten Messmodul zusammengefasst sein. Ein solches Messmodul kann optional zusätzliche Elemente wie beispielsweise eine Vorrichtung zur Signalaufarbeitung (Beispielsweise einen Verstärker) und/oder eine Auswerteeinheit für die Signale aufweisen. Eine derartige Auswerteeinheit kann beispielsweise für die weiter oben beschriebene Analyse der Signalflanken und/oder für die weiter oben beschriebene Bestimmung einer Korrelationsfunktion ausgelegt sein. Durch die beschriebene Integration der beiden Schallaufnehmer und optionaler weiterer Elemente in einem übergeordneten Sensorgehäuse ist eine apparativ relativ einfache, modulare, leicht zu positionierende beziehungsweise auszutauschende und/oder platzsparender Ausgestaltung des übergeordneten Messmoduls möglich. Ein derartiges übergeordnetes Messmodul kann allgemein vorteilhaft auch räumlich etwas entfernt von dem rotierenden Bauteil angeordnet sein, denn aufgrund des hochempfindlichen akustischen Messverfahrens ist es nicht nötig, dass die Messvorrichtung besonders nah an dem Bauteil positioniert ist.

Bei einer weiteren bevorzugten Ausführungsform weist das rotierende Bauteil eine Mehrzahl von über den Umfang verteilten (und insbesondere gleichverteilten) Lüfterflügeln, Schaufeln und/oder Rippen auf. Beispielsweise kann das rotierende Bauteil allgemein ein Lüfter sein. Bei Lüftern ist es allgemein besonders vorteilhaft, wenn entlang der Peripherie des Bauteils eine regelmäßige Anordnung von Lüfterflügeln zur Umwälzung der Luft vorgesehen ist. Derartige Lüfterflügel führen bei der Rotation des Bauteils aber auch zu einer regelmäßigen Abfolge von Druckschlägen, welche leicht über das beschriebene akustische Verfahren detektierbar sind. Bei einem solchen Lüfter ist es allgemein vorteilhaft, wenn der Drehsinn des Lüfters auf die beschriebene einfache Weise überwacht werden kann. Dies erleichtert insbesondere die Überwachung beim anlaufenden Betrieb einer Anlage, welche beispielsweise durch einen solchen Lüfter gelüftet beziehungsweise gekühlt wird. Weiterhin kann der Lüfterzustand zuverlässig überwacht werden, und es können zustandsbasierte Wartungs-Entscheidungen getroffen werden.

Alternativ kann es sich jedoch bei dem Bauteil auch ganz allgemein um ein rotierendes Bauteil handeln, bei dessen Anwendung die Überwachung des Drehsinns von Vorteil ist.

Beispielsweise kann das rotierende Bauteil ein Rotor und/oder eine Kupplung und/oder ein drehendes Werkzeug mit Wuchtstäben, Wuchtbohrungen und/oder Zähnen in der Art eines Zahnrads sein.

Beispielsweise kann das rotierende Bauteil ein Teil einer elektrischen Maschine, insbesondere ein Rotor oder eine Rotorwelle einer solchen elektrischen Maschine sein. Insbesondere wenn die Rotorwelle mit einer regelmäßigen Anordnung von Rippen ausgestattet ist, die sich zur Ausbildung akustischer messbarer Druckschläge eignen, kann der Rotationszustand der Maschine mit dem beschriebenen Verfahren auf sehr einfache Weise überwacht werden.

Grundsätzlich ist es möglich und unter Umständen bevorzugt, wenn das Verfahren zusätzlich eine weitere Überwachung der Rotation des Bauteils mit einem optischen, induktiven und/oder akustischen Verfahren umfasst. Beispielsweise kann mit einem weiteren optischen oder induktiven Drehsensor eine zusätzliche und unter Umständen noch genauere Ermittlung der Drehzahl erfolgen. Weiterhin kann durch eine zusätzliche akustische Messung oder aber durch eine zusätzliche Auswertung eines der bereits gemessenen akustischen Signale (von einem der beiden beschriebenen Schallaufnehmer) weitere Information zum Rotationszustand des rotierenden Bauteils gewonnen werden. Beispielsweise kann über eine Frequenzzerlegung von einem oder mehreren der akustischen Signale eine Überwachung der Gleichmäßigkeit der Rotationsbewegung erfolgen. So kann über eine Bestimmung der Frequenzanteile eine Überwachung einer Unwucht des rotierenden Bauteils erfolgen, insbesondere um einen Verschleiß des zugehörigen Drehlagers zu reduzieren.

Vorteilhafte Ausführungsformen der Überwachungsvorrichtung entsprechen allgemein den beschriebenen vorteilhaften Ausführungsformen des Verfahrens. So kann insbesondere die Vorrichtung eine Auswerteeinheit umfassen, welche für eine der beschriebenen Varianten der Signalauswertung (also für die Flankenanalyse und/oder die Bestimmung der Korrelationsfunktion) geeignet ist.

Nachfolgend wird die Erfindung anhand einiger bevorzugter Ausführungsbeispiele unter Bezugnahme auf die angehängten Zeichnungen beschrieben, in denen:

Figur 1     eine schematische Querschnittsansicht eines rotierenden Bauteils und einer Überwachungsvorrichtung nach einem ersten Beispiel Erfindung zeigt,

Figur 2     die beiden mit einem derartigen Aufbau gemessenen Einzel-Signalfolgen der beiden Schallaufnehmer zeigt und

Figur 3     eine schematische Darstellung der Kreuzkorrelation der beiden in Figur 2 gezeigten Signalfolgen zeigt.

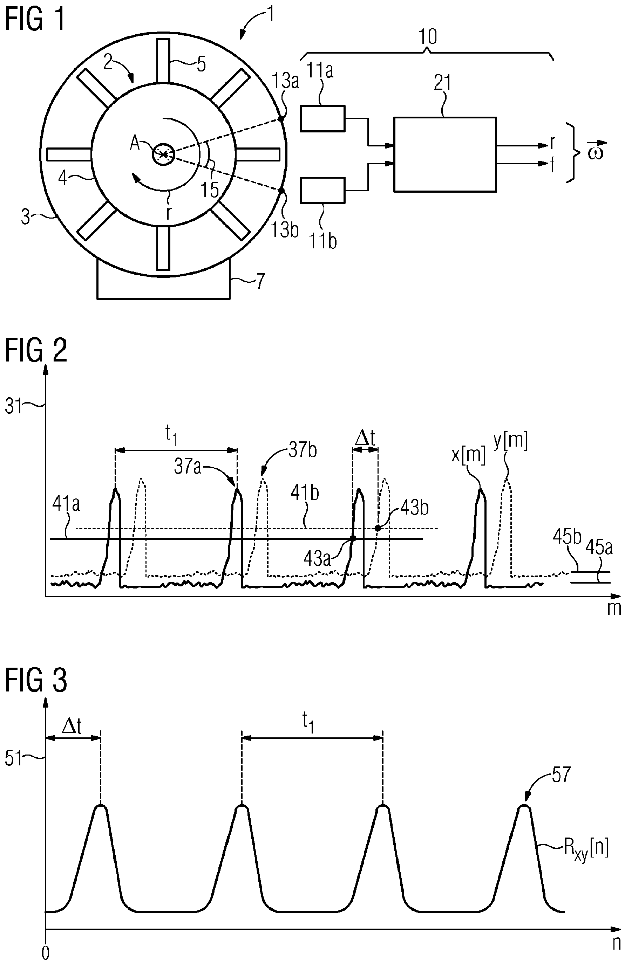

So ist in Figur 1 ein rotierendes Bauteil 1 dargestellt, welches im gezeigten Beispiel als Lüfter ausgestaltet ist. Das Bauteil umfasst ein Gehäuse 3, in welchem ein Lüfterrad 2 um eine Rotationsachse A drehbar gelagert ist. Der Antrieb für die Drehung dieses Lüfterrads 2 erfolgt über einen Motor 7, welcher im unteren Teil der Zeichnung stark schematisch skizziert ist. Das eigentliche rotierende Teil ist hier also das Lüfterrad, wobei dieses jedoch mit den übrigen Komponenten 3 und 7 zu einem Gesamt-Bauteil 1 zusammengefasst ist.

Das Lüfterrad 2 umfasst einen Grundkörper 4, welcher im gezeigten Beispiel eine Anzahl von Lüfterflügeln 5 trägt. In diesem Beispiel sind acht solcher Lüfterflügel 5 gleichmäßig über die Peripherie (also über den Umfang) des Lüfterrades 2 verteilt. Diese Anzahl ist jedoch nur beispielhaft zu verstehen und kann in anderen Beispielen sowohl niedrigere als auch höhere Werte annehmen. Wesentlich ist, dass diese Lüfterflügel geeignet sind, bei einer Drehung des Lüfterrades Luftbewegungen zu verursachen, welche in Form eines Luftschlages akustisch messbar sind. Hierzu ist es prinzipiell nur erforderlich, dass wenigstens ein an dem Grundkörper angeordnetes hervorstehendes Element oder wenigstens eine Vertiefung angeordnet ist, welche einen solchen Luftschlag verursachen kann.

Die in Figur 1 rechts neben dem rotierenden Bauteil 1 dargestellte Überwachungsvorrichtung 10 ist gemäß einem Ausführungsbeispiel der Erfindung realisiert. Sie dient zur Überwachung der Rotation des Bauteils 1. Hierzu umfasst die Vorrichtung 10 zwei Schallaufnehmer 11a und 11b, über welche die von den Lüfterflügeln 5 verursachten Druckschläge akustisch gemessen werden können. Die beiden Schallaufnehmer 11a und 11b sind bezüglich der Rotationsrichtung des rotierenden Bauteils versetzt angeordnet. So weist für den ersten Schallaufnehmer 11a eine erste azimutale Position 13a am Umfang des Bauteils 1 den kürzesten Abstand zu diesem Schallaufnehmer auf. Andererseits weist für den zweiten Schallaufnehmer 11b eine zweite azimutale Position 13b am Umfang des Bauteils 1 den kürzesten Abstand zu diesem zweiten Schallaufnehmer auf. Der Winkelversatz zwischen diesen beiden azimutalen Positionen ist hier mit 15 gekennzeichnet. Er ist im gezeigten Beispiel kleiner als der Winkelversatz zwischen den acht gleichverteilten Lüfterflügeln (welcher 360°/8 = 45° beträgt). Dies ist nicht zwingend notwendig, kann aber Zuverlässigkeit der Bestimmung der Drehzahl zu erhöhen. Wesentlich für die Bestimmung der Drehrichtung ist nur, dass das Verhältnis zwischen dem Winkelversatz der gemessenen Druckschläge und dem Winkelversatz der beiden Schallaufnehmer bekannt ist.

Mittels der beiden Schallaufnehmer 11a und 11b können die von den hervorstehenden Lüfterflügeln 5 verursachten Druckschläge in Form von akustischen Signalen gemessen werden. Diese akustischen Signale werden von einer Auswerteeinheit 21 verarbeitet. Im gezeigten Beispiel sind mittels der Auswerteeinheit 21 sowohl die Drehrichtung r als auch die Drehzahl f ermittelbar. Hierdurch wird also die vollständige vektorielle Winkelgeschwindigkeit $\vec{\omega}$ bestimmt, da $|\vec{\omega}| = 2\pi f$ ist und die Drehrichtung r das Vorzeichen von $\vec{\omega}$ bestimmt. Die Bestimmung der Drehzahl f ist dabei prinzipiell optional. Wesentlich für die Erfindung ist, dass zumindest die Drehrichtung r ermittelt wird. Die genaue Ermittlung dieser Größen wird beispielhaft für zwei unterschiedliche Ausführungsformen des Verfahrens mittels der nachfolgenden beiden Figuren näher erläutert.

So zeigt Figur 2 in schematischer Darstellung zwei Einzel-Signalfolgen x[m] und y[m], welche mittels der beiden Schallaufnehmer 11a und 11b gemessen werden können. Gezeigt ist jeweils der Schallpegel 31 als Funktion des Index m, wobei dieser Index proportional zurzeit ist. Es handelt sich also jeweils um eine diskrete Abfolge eines zeitabhängigen Signals. Jede der beiden Einzel-Signalfolgen x[m] und y[m] zeigt hier ein periodisch wiederkehrendes Muster von gleichmäßig wiederkehrenden Signal-Peaks 37a und 37b. Dabei sind die Signal-Peaks 37a durch die Druckschläge verursacht, die von dem ersten Schallaufnehmer 11a detektiert werden und die Signal-Peaks 37b sind durch die Druckschläge verursacht, die von dem zweiten Schallaufnehmer 11b detektiert werden. Die Abstände der Signal-Peaks sind jeweils innerhalb einer Einzel-Signalfolge im Wesentlichen gleich und sie weisen auch zwischen den beiden Signalfolgen den gleichen Abstand auf. Geringfügige Abweichungen können sich dabei allerdings prinzipiell sowohl durch Fertigungstoleranzen bei der Gleichmäßigkeit der Lüfterflügel oder aber auch durch rauschbedingte Verzerrungen in den akustischen Messsignalen ergeben.

Für die beiden in Figur 2 dargestellten Einzel-Signalfolgen ist das Signal-zu-Rausch-Verhältnis vergleichsweise gut, sodass sich die Parameter für die Rotation des Bauteils gut aus einer Flankenanalyse der Signal-Peaks ermitteln lassen. Hierzu kann, wie in Figur 2 schematisch dargestellt, für jede der beiden Signalfolgen das Eintreten eines Peaks durch die Überschreitung eines vorgegebenen Schwellwertes detektiert werden. Dabei können die Schwellwerte für die einzelnen Signalfolgen prinzipiell unterschiedlich gewählt sein, wie dies in Figur 2 dargestellt ist. So wird für die Signalfolge x[m] hier das Überschreiten eines ersten Schwellwertes 41a überwacht, und für die zweite Signalfolge y[m] wird das Überschreiten eines zweiten Schwellwerts 41b überwacht. Eine solche unterschiedliche Wahl von Schwellwert kann beispielsweise dann günstig sein, wenn wie im gezeigten Beispiel die beiden Basislinien 45a und 45b der einzelnen Signalfolgen unterschiedlich hoch sind. Solche unterschiedlich hohen Basislinien können sich durch unterschiedliche Rauschbeiträge ergeben, beispielsweise wenn die beiden Schallaufnehmer einen unterschiedlichen radialen Abstand von dem rotierenden Bauteil aufweisen und somit unterschiedlich starken Umgebungsgeräuschen ausgesetzt sind. Allgemein können solche unterschiedlich hohen Basislinien aber auch dadurch verursacht sein, dass die beiden Schallaufnehmer prinzipiell nicht baugleich sein müssen und/oder dass ihre Signale unterschiedlich verarbeitet werden können. Eine analoge Flankenanalyse kann statt der absoluten Signale alternativ auch für die Differenz von jeweils aufeinander Signalwerten durchgeführt werden (entsprechend einer Bestimmung eines Peaks in der Ableitung des Signals).

Durch die Flankenanalyse mittels Schwellwertüberwachung ergibt sich für die erste Signalfolge x[m] eine regelmäßige Abfolge von ersten Zeitpunkten 43a, die den Signal-Peaks der ersten Signalfolge zugeordnet sind. Der zeitliche Abstand dieser ersten Zeitpunkte entspricht dabei dem Zeitabstand der Peaks (da der Index m proportional zurzeit ist), welcher hier mit $t_1$ bezeichnet ist. Unter Verwendung der Flügelzahl i=8 ergibt sich die Umlaufzeit T für eine vollständige Rotation zu T = 8*$t_1$ oder allgemein T = i*$t_1$. Die Drehzahl f ist der Kehrwert 1/T. Zusätzlich zu der Drehzahl f (die prinzipiell aus jeder der beiden Signalfolgen ermittelt werden kann), ist aus der Kombination der beiden Signalfolgen auch die Drehrichtung ableitbar. Durch den Winkelversatz 15 der beiden Schallaufnehmer ergibt sich nämlich ein zeitlicher Versatz Δt zwischen den einzelnen Signal-Peaks und entsprechend zwischen den für die Schwellwertüberschreitung ermittelten Zeitpunkten 43a und 43b. Dabei ist die Reihenfolge, in dem diese beiden Peaks auftreten, charakteristisch für die Drehrichtung r des rotierenden Bauteils 1 und die Drehrichtung kann ermittelt werden, sofern der Winkelversatz der beiden Schallaufnehmer und der Winkelversatz zwischen regelmäßig aufeinanderfolgenden Luftschlägen bekannt ist. Für das Beispiel der Figur 1, bei dem der Winkelversatz 15 zwischen den beiden Schallaufnehmern geringer ist als der Winkelversatz der untereinander gleich ausgebildeten Lüfterflügel 5, ist es beispielsweise charakteristisch für die dargestellte Drehrichtung r im Uhrzeigersinn, dass in den beiden dicht aufeinanderfolgenden Paaren von Signal-Peaks jeweils der Peak in der Signalfolge des ersten Schallaufnehmers 11a zuerst auftritt. Somit kann durch das Vorzeichen von dem jeweils kleinsten vorliegenden Zeitversatz Δt zwischen zwei Signal-Peaks unterschiedlicher Kurven zuverlässig auf die Drehrichtung geschlossen werden. Die in Figur 2 schematisch dargestellte relativ einfache Flankenanalyse ist dabei grundsätzlich ausreichend, wenn das Signal-zu-Rausch-Verhältnis genügend hoch ist.

Für eine genauere Analyse und insbesondere bei Vorliegen von Signalen mit einem schlechteren Signal-zu-Rausch-Verhältnis kann jedoch alternativ oder zusätzlich auch auf eine Korrelationsanalyse zurückgegriffen werden. Hierzu ist die Auswerteeinheit 21 beispielsweise dazu ausgestaltet, eine Korrelationsfunktion aus den beiden Einzel-Signalfolgen zu bilden. Eine derartige Korrelationsfunktion 51, die sich als Kreuzkorrelation $R_{xy}[n]$ der beiden Signalfolgen $x[m]$ und $y[m]$ ergibt, ist schematisch in Figur 3 dargestellt. Da die beiden Einzel-Signalfolgen jeweils periodisch sind, ist auch die Kreuzkorrelation $R_{xy}[n]$ eine periodische Funktion des Verschiebungsindex n, der ebenfalls proportional zurzeit ist. Dabei weist die Kreuzkorrelation dieselbe Periodendauer $t_1$ auf wie die beiden Einzel-Signalfolgen. In der Kreuzkorrelationsfunktion ist eine regelmäßige Abfolge von Korrelations-Peaks 57 zu erkennen. Diese Korrelations-Peaks 57 sind jeweils breiter als die Peaks in den Einzel-Signalfolgen der Figur 2. Aus ihrer Lage und ihrem Abstand lassen sich wiederum sowohl die Drehrichtung als auch die Drehzahl ermitteln. So ergibt sich die Drehzahl wiederum aus dem Peakabstand $t_1$, auf analoge Weise wie oben im Zusammenhang mit Figur 2 angegeben. Die Drehrichtung ergibt sich ebenfalls in ähnlicher Weise aus dem Zeitversatz $\Delta t$, welcher in der Korrelationsfunktion als Abstand des Maximums des ersten Peaks vom Verschiebungswert n=0 ablesbar ist.

Da die Korrelationsfunktion allgemein insgesamt weniger Rauschbeiträge zeigt als die beiden Einzel-Signalfolgen, aus denen sie gebildet ist, kann vor allem bei einem schlechten Signal-zu-Rausch-Verhältnis die Bestimmung von Drehrichtung und/oder Drehzahl aus der Korrelationsfunktion generell zuverlässiger sein als aus den Einzel-Signalfolgen.

## Patentansprüche

1. Verfahren zur Überwachung der Rotation eines rotierenden Bauteils (1), umfassend die folgenden Schritte:

   a) Messung akustischer Signale, welche durch Luftbewegungen aufgrund der Rotation des Bauteils (1) verursacht sind, mittels wenigstens zweier Schallaufnehmer (11a,11b),

      - wobei die beiden Schallaufnehmer (11a,11b) außerhalb des rotierenden Bauteils (1) ortsfest positioniert sind
      - und wobei die beiden Schallaufnehmer (11a,11b) bezüglich der Laufrichtung des rotierenden Bauteils (1) versetzt zueinander positioniert sind,

   und
   b) Bestimmung der Drehrichtung (r) des rotierenden Bauteils (1) mittels der Analyse des zeitlichen Versatzes ($\Delta t$) von periodischen Anteilen der Signale ($x[m],y[m]$) der beiden Schallaufnehmer (11a,11b).

2. Verfahren nach Anspruch 1, bei welchem das rotierende Bauteil (1) wenigstens eine hervorstehende Struktur (5) und/oder wenigstens eine Einbuchtung an einer jeweils zugehörigen Umfangsposition des Bauteils (1) aufweist, wobei die hervorstehende Struktur (5) und/oder die Einbuchtung bei der Rotation des Bauteils einen Druckschlag in der Umgebungsluft verursachen kann.

3. Verfahren nach Anspruch 2, bei welchem das rotierende Bauteil (1) eine Mehrzahl von hervorstehenden Strukturen (5) und/oder Einbuchtungen aufweist, welche über den Umfang des Bauteils (1) verteilt angeordnet sind.

4. Verfahren nach einem der vorhergehenden Ansprüche, welches zusätzlich den folgenden Schritt umfasst:

   c) Bestimmung der Drehzahl (f) des rotierenden Bauteils (1), insbesondere mittels der Analyse des zeitlichen Versatzes ($\Delta t$) von periodischen Anteilen innerhalb des Signals ($x[m],y[m]$) eines einzelnen Schallaufnehmers (11a,11b).

5. Verfahren nach einem der vorhergehenden Ansprüche, bei welchem die Bestimmung der Drehrichtung (r) und/oder die Bestimmung der Drehzahl (f) auf einer Bestimmung der Zeitpunkte (43a, 43b) basiert, für welche die Höhe der jeweiligen einzelnen Schallaufnehmer-Signale ($x[m],y[m]$) und/oder der Anstieg in der Höhe der jeweiligen einzelnen Schallaufnehmer-Signale einen jeweils vorgegebenen Schwellwert (41a,41b) überschreitet.

6. Verfahren nach einem der vorhergehenden Ansprüche, bei welchem zur Bestimmung der Drehrichtung (r) und/oder zur Bestimmung der Drehzahl (f) der folgende zusätzliche Schritt vorgenommen wird:

d) Bestimmung einer Kreuzkorrelationsfunktion ($R_{xy}[n]$) aus den Einzel-Signalfolgen ($x[m],y[m]$) der beiden einzelnen Schallaufnehmer (11a,11b) mittels einer Auswerteeinheit (21).

7. Verfahren nach einem der vorhergehenden Ansprüche, welches die folgenden zusätzlichen Schritte umfasst:

    e) Speicherung von wenigstens einer Teilfolge aus der Einzel-Signalfolge ($x[m],y[m]$) von wenigstens einem der beiden Schallaufnehmer (11a,11b),
    f) Messung einer weiteren Teilfolge mit demselben Schallaufnehmer (11a,11b) zu einem späteren Zeitpunkt,
    g) Bestimmung einer Kreuzkorrelationsfunktion ($R_{xy}[n]$) aus den in Schritt e) gespeicherten Teilfolge und der in Schritt f) gemessenen Teilfolge.

8. Verfahren nach einem der vorhergehenden Ansprüche, bei welchem die beiden Schallaufnehmer (11a,11b) in unterschiedlichen radialen Abständen zum rotierenden Bauteil (1) angeordnet sind.

9. Verfahren nach einem der vorhergehenden Ansprüche, bei welchem die beiden Schallaufnehmer (11a,11b) innerhalb eines gemeinsamen Gehäuses angeordnet sind, welches außerhalb des rotierenden Bauteils ortsfest positioniert ist.

10. Verfahren nach einem der vorhergehenden Ansprüche, bei welchem das rotierende Bauteil (1) eine Mehrzahl von über den Umfang verteilten Lüfterflügeln (5), Schaufeln und/oder Rippen aufweist.

11. Verfahren nach Anspruch 10, bei welchem die Lüfterflügel (5), Schaufeln und/oder Rippen über den Umfang gleichverteilt sind.

12. Verfahren nach einem der vorhergehenden Ansprüche, bei welchem das rotierende Bauteil (1) ein Lüfter ist.

13. Verfahren nach einem der vorhergehenden Ansprüche, bei welchem das rotierende Bauteil ein Zahnrad oder ein rotierendes Bauteil mit Auswuchtstäben und/oder Auswuchtlöchern ist.

14. Verfahren nach einem der vorhergehenden Ansprüche, bei welchem zusätzlich eine weitere Überwachung der Rotation des Bauteils mit einem optischen, induktiven und/oder akustischen Verfahren erfolgt.

15. Vorrichtung zur Überwachung der Rotation eines rotierenden Bauteils (1), umfassend

    - wenigstens zwei Schallaufnehmer (11a,11b) zur Messung akustischer Signale ($x[m],y[m]$), welche durch Luftbewegungen aufgrund der Rotation des Bauteils (1) verursacht sind, und
    - eine Auswerteeinheit (21) zur Bestimmung der Drehrichtung (r) des rotierenden Bauteils (1) mittels einer Analyse des zeitlichen Versatzes ($\Delta t$) von periodischen Anteilen der Signale ($x[m],y[m]$) der beiden Schallaufnehmer (11a,11b),
    - wobei die beiden Schallaufnehmer (11a,11b) außerhalb des rotierenden Bauteils ortsfest positioniert sind
    - und wobei die beiden Schallaufnehmer (11a,11b) bezüglich der Laufrichtung des rotierenden Bauteils versetzt zueinander positioniert und/oder positionierbar sind.

FIG 1

FIG 2

FIG 3

Europäisches
Patentamt

European
Patent Office

Office européen
des brevets

# EUROPÄISCHER RECHERCHENBERICHT

**Nummer der Anmeldung**

EP 17 19 4276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GB 1 404 133 A (ABBIRKO INSTR LTD) 28. August 1975 (1975-08-28) * Seite 1, Zeile 11 - Seite 1, Zeile 33 * * Seite 1, Zeile 82 - Seite 2, Zeile 62; Abbildungen 1,3 * | 1-6,8-15 | INV. G01P13/04 G01P3/26 G01P3/48 |
| Y | DE 199 24 201 A1 (SEW EURODRIVE GMBH & CO [DE]) 30. November 2000 (2000-11-30) * Spalte 3, Zeile 54 - Spalte 3, Zeile 66 * * Spalte 4, Zeile 59 - Spalte 5, Zeile 17; Abbildungen 2,5,6 * | 1-6,8-15 | |
| Y | US 2011/219741 A1 (ERNST JAMES [US] ET AL) 15. September 2011 (2011-09-15) * Absätze [0034], [0043] - [0048]; Ansprüche 1,4,6; Abbildungen 1,4 * | 1-5,8-15 | |
| Y | US 3 815 426 A (ROHNER D) 11. Juni 1974 (1974-06-11) * Spalte 1, Zeile 19 - Spalte 2, Zeile 29; Anspruch 1; Abbildungen 1,4 * | 1-5,8-15 | RECHERCHIERTE SACHGEBIETE (IPC) |
| Y | DE 10 2013 215695 A1 (SCHAEFFLER TECHNOLOGIES GMBH [DE]) 12. Februar 2015 (2015-02-12) * Absätze [0004] - [0009], [0021] - [0025]; Abbildung 3 * | 1-6,8-15 | G01P |
| Y | US 3 531 985 A (MARTIN MICHAEL S) 6. Oktober 1970 (1970-10-06) * Spalte 1, Zeile 47 - Spalte 2, Zeile 17; Abbildung 4 * * Spalte 6, Zeile 28 - Spalte 6, Zeile 64 * | 1,4,15 | |

-/--

Der vorliegende Recherchenbericht wurde für alle Patentansprüche erstellt

| Recherchenort | Abschlußdatum der Recherche | Prüfer |
|---|---|---|
| München | 7. März 2018 | Felicetti, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 17 19 4276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 4 248 085 A (COULTHARD JOHN) 3. Februar 1981 (1981-02-03) * Seite 49 * * Spalte 8, Zeile 41 - Spalte 8, Zeile 60 * ----- | 6 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. März 2018 | Felicetti, Christoph |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

Seite 2 von 2

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-6, 8-15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT DER ERFINDUNG ERGÄNZUNGSBLATT B

**Nummer der Anmeldung**

EP 17 19 4276

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6, 8-15

    Verfahren und Vorrichtung zur Überwachung der Rotation eines rotierenden Bauteils, wobei akustische Signale von zwei Schallaufnehmern erfasst werden und ein zeitlicher Versatz ermittelt wird.
    Abhängige Ansprüche betreffen Details zur Erzeugung und Verarbeitung der Schallsignale sowie eine optionale zusätzliche Geschwindigkeitsbestimmung.
    ---

2. Anspruch: 7

    Verfahren und Vorrichtung zur Überwachung der Rotation eines rotierenden Bauteils, wobei akustische Signale von zwei Schallaufnehmern erfasst werden und ein zeitlicher Versatz ermittelt wird.
    Abhängiger Anspruch 7 betrifft die Aufzeichnung des Signals eines einzelnen Sensors und die Bestimmung einer Kreuzkorrelation mit einem später aufgenommenen Signal des selben Sensors, um daraus eine Veränderung der Signalqualität zu bestimmen.
    ---

## ANHANG ZUM EUROPÄISCHEN RECHERCHENBERICHT
## ÜBER DIE EUROPÄISCHE PATENTANMELDUNG NR.

EP 17 19 4276

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2018

| Im Recherchenbericht angeführtes Patentdokument | Datum der Veröffentlichung | Mitglied(er) der Patentfamilie | Datum der Veröffentlichung |
|---|---|---|---|
| GB 1404133 A | 28-08-1975 | KEINE | |
| DE 19924201 A1 | 30-11-2000 | DE 19924201 A1<br>EP 1058120 A1 | 30-11-2000<br>06-12-2000 |
| US 2011219741 A1 | 15-09-2011 | CA 2793305 A1<br>CN 103429852 A<br>EP 2547893 A2<br>JP 5819395 B2<br>JP 2013530331 A<br>US 2011219741 A1<br>WO 2011152914 A2 | 08-12-2011<br>04-12-2013<br>23-01-2013<br>24-11-2015<br>25-07-2013<br>15-09-2011<br>08-12-2011 |
| US 3815426 A | 11-06-1974 | DE 2141068 A1<br>US 3815426 A | 01-03-1973<br>11-06-1974 |
| DE 102013215695 A1 | 12-02-2015 | KEINE | |
| US 3531985 A | 06-10-1970 | KEINE | |
| US 4248085 A | 03-02-1981 | DE 2856032 A1<br>GB 2011621 A<br>JP S54101377 A<br>NL 7900793 A<br>US 4248085 A | 12-07-1979<br>11-07-1979<br>09-08-1979<br>04-08-1980<br>03-02-1981 |

EPO FORM P0461

Für nähere Einzelheiten zu diesem Anhang : siehe Amtsblatt des Europäischen Patentamts, Nr.12/82